# EUROPÄISCHE PATENTANMELDUNG

(11) **EP 0 806 447 A2**
(43) Veröffentlichungstag der Anmeldung: **12.11.1997**
(21) Anmeldenummer: 97107044.6
(22) Anmeldetag: 29.04.1997
(51) Int. Cl.: C08J 3/22

(54) **Verfahren zur Herstellung von Mischungen niedermolekularer Verbindungen mit Polymeren**

(30) Priorität: 09.05.1996 DE 19618677
(71) Anmelder: BASF AKTIENGESELLSCHAFT, 67056 Ludwigshafen (DE)
(72) Erfinder: Niessner, Norbert, Dr., 67159 Friedelsheim (DE)

(57) **Zusammenfassung**

Verfahren zur Herstellung quasi-homogener Mischungen niedermolekularer Verbindungen wie z.B. Pigmenten mit Styrolpolymeren, wobei das Styrolpolymere, insbesondere ein Styrolhomo- oder -copolymerisat, eine vorgefertigten Mischung eines Styrol/Butadien-Blockcopolymeren mit einer oberflächenaktiven Verbindung in Form eines Masterbatch und die niedermolekulare Verbindung in der Schmelze verknetet werden.

## Beschreibung

Die Erfindung betrifft ein Verfahren zur Herstellung von Mischungen niedermolekularer Verbindungen mit Polymeren, das eine bessere Verteilung der niedermolekularen Verbindungen in dem Polymeren erlaubt.

Das Einmischen von niedermolekularen Verbindungen in Polymere spielt in der Praxis der Kunststoffherstellung eine große Rolle. Als niedermolekulare Verbindungen sollen dabei nicht-polymere Stoffe im weitesten Sinne verstanden werden, insbesondere Hilfsmittel, Farbstoffe und Pigmente, wie sie üblicherweise in Polymerwerkstoffen verwendet werden.

Es ist bekannt, für das Einarbeiten von Pigmenten oder Farbstoffen in Kunststoffrohstoffe sog. Masterbatches (Konzentrate) herzustellen, wobei sich speziell für das Zurichten von Styrolpolymer-Mischungen Konzentrate auf der Grundlage von Styrol/Butadien-Blockcopolymeren ("SB-Blockcopolymere") eingeführt haben (vgl. US 3 324 604; DE 2 435 513; EP 287 140; FR 2 607 054; US 4 600 736; US 4 116 909). Dabei wird die gute Dispergierwirkung von SB-Blockcopolymeren und dadurch verbesserte Verteilung im pigmentierten Polymeren und entsprechend eine erhöhte Deckkraft des Pigments hervorgehoben.

Es besteht die Vorstellung, die jedoch die nachstehend beschriebene Erfindung nicht begrenzen soll, daß SB-Blockcopolymere eine "verträglichmachende" Wirkung haben.

Die erzielte Wirkung ist jedoch verbesserungsbedürftig, besonders, wenn eine Vielzahl von Additiven in eine homogene Polymerschmelze eingebracht werden soll, um ein farbiges, aber möglichst transparentes Polymer herzustellen, z.B. eine Mischung des Polymeren mit einem oder mehreren Farbstoffe.

Auch typische, in Wasser grenzflächenaktive Substanzen (z.B. Seifen) werden als Additive für Polymerschmelzen verwendet, die im Spritzgußverfahren verarbeitet werden sollen. Im erstarrenden Polymeren wandern sie unter Entmischung an die Oberfläche des Formteils und wirken dort z.B. antistatisch. Auch sind "Antifog"-Eigenschaften beschrieben - grenzflächenaktive Substanzen erleichtern die Benetzung von Kunststoffoberflächen durch kondensierendes Wasser, indem die Wassertropfen in die Form eines Films gebracht (gespreitet) werden.

Andererseits ist allgemein bekannt, grenzflächenaktive Substanzen als Emulgatoren oder Dispergierhilfsmittel einzusetzen, um unlösliche Stoffe als Emulsionen und Dispersionen in wäßrige Systeme einzubringen.

Die Ausnutzung der typischen grenzflächenaktiven Eigenschaften von Substanzen, die in wäßriger Umgebung als Emulgatoren oder Dispergierhilfsmittel wirken, bei der Herstellung von Mischungen von Polymerschmelzen mit niedermolekularen Verbindungen scheint jedoch nicht möglich, was daran zu liegen scheint, daß sich Polymere nicht wie wäßrige Systeme verhalten. Daher wird die Wirkung von Emulgatoren oder Dispergierhilfsmitteln in der von wäßrigen Systemen bekannten Weise in Polymeren i.a. nicht beobachtet.

Es wurde nun gefunden, daß dauerhafte, quasi-homogene Mischungen einer oder mehrerer niedermolekularer Verbindungen mit einer Schmelze eines Styrolpolymeren erhalten werden, wenn man der Schmelze die niedermolekulare(n) Verbindung(en) zusammen mit einer Mischung aus einem Styrol/Butadien-Blockcopolymeren und einer oberflächenaktiven Verbindung zusetzt und die Mischung in an sich bekannter Weise verknetet.

Unmittelbarer Erfindungsgegenstand ist somit ein Verfahren zur Herstellung quasi-homogener Mischungen niedermolekularer Verbindungen mit Styrolpolymeren, bei dem erfindungsgemäß das Styrolpolymere, eine vorgefertigten Mischung eines Styrol/Butadien-Blockcopolymeren mit einer oberflächenaktiven Verbindung ("Masterbatch") und die niedermolekulare Verbindung in der Schmelze verknetet werden.

Das erfindungsgemäße Verfahren kann auf die üblichen Styrolpolymeren, d.h. Styrolhomo- und -copolymere wie Standardpolystyrol, schlagzähes Polystyrol, ASA, ABS bzw. deren Schmelzen angewandt werden.

Es tritt somit überraschenderweise ein synergistischer Effekt ein, d.h. eine Verstärkung der an sich bekannten, "verträglichmachenden". Wirkung von SBS durch die Mitverwendung von bestimmten grenzflächenaktiven Substanzen, die über die Wirkung der Einzelsubstanzen weit hinausreicht.

Als Styrol-Butadien-Blockcopolymere eignen sich lineare und sternförmige Blockcopolymere aus drei oder mehr Blöcken je Sternast der allgemeinen Struktur (S-B)ₘ, (S-B-S)ₘ oder (S-B-S-B)ₘ mit einer mittleren Molmasse M_{w} von z.B. 50 000 (insbesondere 56 000) bis 500 000 g/mol je Copolymermolekül, wobei S einen Polystyrolblock einer Molmasse von z.B. 3 000 bis 230 000 [g/mol] und B einen Polybutadienblock einer Molmasse von z.B. 2 000 bis 30 000 [g/mol] bedeutet, wobei die Gesamtmolmasse aller Polystyrolblöcke z.B. 50 000 bis 300 000 [g/mol] und die Gesamtmolmasse aller Polybutadienblöcke z.B. 6 000 bis 200 000 [g/mol] beträgt, die Blockübergänge scharf oder verschmiert sind und die Sternastzahl m 3 bis 15 ist.

Besonders geeignet sind Styrol-Butadien-Blockcopolymere der vorstehenden Art aus symmetrisch oder insbesondere unsymmetrisch sternförmig verzweigten Styrol/Butadien-Blockcopolymeren der allgemeinen Struktur (S1-B1)ₙ-X-(B2-S2)ₚ, in der S1-B1 einen Blockcopolymerabschnitt aus wenigstens je einem Polystyrolblock S1 der Molmasse 3 000 bis 230 000 [g/mol] und einem Polybutadienblock B1 der Molmasse 2 000 bis 30 000 [g/mol] und B2-S2 einen Blockcopolymerabschnitt aus wenigstens je einem Polystyrolblock S2 der Molmasse 2 000 bis 60 000 [g/mol] und einem Polybutadienblock B2 der Molmasse 2 000 bis 30 000 [g/mol] bedeutet, wobei die Gesamtmolmasse von S1-B1: 5 000 bis 250 000 [g/mol] und die von B2-S2: 5 000 bis 75 000 [g/mol] ist, die Blockübergänge scharf oder verschmiert sind und die Gesamt-Sternastzahl von m und n bzw. die Funktionalität des (n+p)-wertigen Restes X eines Kopplungsmittels insgesamt 3 bis 15 ist, mit der Maßgabe, daß n < p ist, und der Polystyrolblock des Abschnitts S1-B1 mindestens die 1,5-fache Molmasse des Polystyrolblocks des Abschnitts B2-S2 aufweist.

Das Kupplungszentrum X wird durch die Umsetzung der lebenden anionischen Kettenenden mit einem mehrfunktionellen Kupplungs-(Kopplungs-)mittel gebildet. Beispiel für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt.

Ebenfalls geeignet sind lineare Styrol/Butadien-Blockcopolymere mit mindestens 2 Polystyrolblöcken und mindestens einem Polybutadienblock, wobei die vorstehenden Molgewichtsangaben für S1 bzw. B1 gelten.

Bevorzugt sind die vorgenannten Blockcopolymeren gegen den Abbau durch Licht, Luftsauerstoff und/oder Wärme stabilisiert. Als Stabilisierungsmittel eignen sich z.B. die üblichen sterisch behinderten Phenole z.B. in einer Menge von, bezogen auf das Blockcopolymere, 0,1 bis 2 Gew.-%. Verwendet werden können daneben oder anstelle des Phenols z.B. 0,1 bis 2 Gew.-% eines organischen Phosphits der allgemeinen Formel RO₃P, in der R Alkyl, Aryl oder Cycloalkyl bedeutet.

Erfindungsgemäße Styrol/Butadien-Blockcopolymere umfassen demnach sowohl lineare Styrol/Butadien-Blockcopolymere (also z.B. solche mit mindestens 2 Polystyrol-Blöcken und mindestens einem Polybutadien-Block), wobei die vorstehenden Molmassenangaben gelten, als auch symmetrisch oder - bevorzugt - unsymmetrisch - sternförmig aufgebaute Styrol/Butadien-Blockcopolymere die bevorzugt eine gegen den Abbau durch Licht, Luftsauerstoff und/oder Wärme stabilisierende Menge von, bezogen auf das Blockcopolymere, 0,1 bis 2 Gew.-% eines sterisch behinderten Phenols und/oder 0,1 bis 2 Gew.-% eines organischen Phosphits der allgemeinen Formel RO₃P, in der R gleiche oder verschiedene Alkyl-, Aryl- oder Cycloalkyl-Reste sein können, enthalten.

Nach einer weiteren, ebenfalls vorteilhaften Ausführungsform kann zusätzlich eine wirksame Menge von, bezogen auf das organische Phosphit, bis zu 5 Gew.-% eines Amins enthalten sein. Triisopropanolamin ist hierbei besonders bevorzugt.

Auch Mischungen erfindungsgemäßer SB-Blockcopolymerer mit untergeordneten Mengen anderer thermoplastisch verarbeitbarer Polymerer können erfindungsgemäß verwendet werden. Z.B. können anstelle der beschriebenen reinen Styrol/Butadien-Blockcopolymeren insbesondere deren Mischungen mit Polystyrol (Standard-Polystyrol oder schlagzäh, d.h. kautschukmodifiziert), Styrol/Acrylnitril-Copolymeren, Polycarbonat, Styrol/Maleinsäureanhydrid-Copolymeren und Styrol/(Meth)acrylat-Copolymere in entsprechender Menge, d.h. unter Berücksichtigung des Anteils an SB-Blockcopolymeren eingesetzt werden. Im allgemeinen sollten solche Mischungen mindestens 50 Gew.-% des SB-Blockcopolymeren enthalten.

Als sterisch behinderte Phenole sind beispielsweise folgende Verbindungen geeignet, die z.T. außer der typischen Phenolstruktur noch Strukturelemente aufweisen, die nach einem anderen Mechanismus stabilisierend wirken:

α-Tocopherol, 2,6-Dimethylphenol, 2,6-Di-t-butyl-phenol, 2,6-Di-t-butyl-4-methylphenol, n-Octadecyl-3-(3,5-di-t-butyl-4-hydroxyphenyl)propionat, Tetrakis [3-(3,5-di-t-butyl-4-hydroxyphenyl) propionyloxymethyl]methan, 2-(2-Hydroxy-3-t-butyl-5-methylbenzyl)-4-methyl-6-t-butylphenylacrylat, 2-(2-Hydroxy-3-t-butyl-5-methylbenzyl)-4-methyl-6-t-butyl-phenylmethacrylat, 2-(3,5-Di-t-butyl-4-hydroxybenzyl)-4-methylphenylmethacrylat, 2-(3,5-Di-t-butyl-4-hydroxybenzyl)-4-methylphenylacrylat, 4-(3,5-Di-t-butyl-4-hydroxybenzyl)phenylacrylat, 2-(3,5-Di-t-butyl-4-hydroxybenzyl)phenylmethacrylat, 2,6-Bis(2-hydroxy-3-t-butyl-5-methylbenzyl)-4-methylphenylmethacrylat. Besonders bevorzugt sind 2-(2-Hydroxy-3-t-5-methylbenzyl)-4-methyl-6-t-butyl-phenylacrylat, 2,6-Di-t-butylphenyl-4-methylphenol, n-Octadecyl-3-(3,5-di-t-butyl-4-hydroxyphenyl)propionat und 2-Tert.-butyl-6-(3-t-butyl-2-hydroxy-5-methylbenzyl)-4-methylphenylacrylat.

In α-Stellung nur einfach substituierte oder unsubstituierte Phenole sind nur begrenzt verwendbar, da sie bei der Verarbeitung zu deutlichen Gelbfärbungen führen können.

Außerdem können weitere Zusätze vorhanden sein, wie polare und unpolare Wachse (nieder- bis mittelmolekulare Polyolefine, langkettige Amide, Stearin-, Myristin-, Laurin-, Palmitinsäureester, -salze, -säureamide), oder auch weitere anorganische und/oder organische Stabilisatoren. Beispielhaft seien genannt: Bisstearoylethylendiamin, Calciumstearat, Zinkstearat, Erucasäureamid, Mikrohartwachs (z.B. BeSquare der Fa. Petrolite Polymers) oder Mineralöl. Weiterhin enthalten können sein: zusätzliche, nicht phenolische und nicht phosphitische Stabilisatoren, W-Stabilisatoren, "HALS"-(hindered amine light stabilizer)-Verbindungen, Pigmente, Farbstoffe und Füllstoffe.

### Grenzflächenaktive Substanzen

Grenzflächenaktive Substanzen im Sinne der Erfindung sind beispielsweise Erdalkalimetall- und Alkalimetallseifen von Carbonsäuren und Sulfonsäuren (Me-O₂C-CₙH₂ₙ₊₁ bzw. Me-O₃S-CₙH₂ₙ₊₁), wobei Me den einwertigen Rest des Alkali- oder Erdalkalimetalls oder dessen technischer Äquivalente wie Ammonium, NR₄, Na, K, Ca/2 oder Mg/2 bedeutet und n ganzzahlige Werte von z.B. 8 bis 20 annehmen kann). Andere grenzflächenaktive Substanzen sind etwa Sorbitan-Fettsäureester, Polyoxyethylen-Sorbitan-Fettsäureester, Polyoxyethylen-Sorbitester, Polyoxyethylen-Sorbitol, Polyoxyethylen-Fettsäureester und Polyoxyethylen-Fettalkohole, Mono- und Diglyceride der Stearin-, Palmitin-, Laurin-, Myristin- und Ölsäure, sowie deren ethoxylierte Derivate, Polyethylenglykol- und Polypropylenglykolether des Pentaerythrits, insbesondere Mono-, Di- und Triester der Stearin-, Palmitin-, Laurin-, Myristin- und Ölsäure sowie deren Mischungen, sowie ethoxylierte Amine und Fettsäurealkanolamide.

Die genannten grenzflächenaktiven Substanzen können allein oder in Form von Mischungen unter den üblichen Bedingungen mit den SB-Blockcopolymeren zu einem Masterbatch verarbeitet werden.

Unter Verarbeitung werden dabei alle üblichen Methoden verstanden, mit denen thermoplastisch verarbeitbare Polymere aufgeschmolzen und umgeformt werden, z.B. mittels Extrudern, Spritzgußmaschinen, Knetern usw.

Das erfindungsgemäße Vermischen des Masterbatches mit Styrolpolymer und der oder den niedermolekularen Verbindung(en) geschieht auf die gleiche Weise wie die Herstellung des Masterbatches, also z.B. mittels Extrudern, Spritzgußmaschinen, Knetern usw.

### Beispiele

### Styrol/Butadien-Blockcopolymer

Als Styrol/Butadien-Blockcopolymer wurde ein handelsübliches lineares 3-Block-Copolymer des Aufbaus S-B-S mit einem Gewichtsverhältnis von Polystyrol- zu Polybutadien-Anteilen von 74 zu 26 verwendet. Es handelt sich um ein Polymer mit einer gelchromatographisch bestimmten zahlenmittleren Molmasse Mₙ von 90 000 bzw. gewichtsmittleren Molmasse M_{w} von 94 000 [g/mol].

Komponente A enthält als Phosphit 0,8 % handelsübliches Trisnonylphenylphosphit (TNPP) und als sterisch gehindertes Phenol ("Phenol") 0,3 % handelsübliches 2-t-Butyl-6-(3-t-butyl-2-hydroxy-5-methyl-benzyl)-4-methylphenylacrylat.

### Oberflächenaktive Verbindung

Als oberflächenaktive Verbindung wurde ein handelsübliches Glycerinmonooleat, ATMER 1007 der ICI (Komponente B 1) sowie ein ebenfalls handelsübliches Glycerinmonostearat, ATMER 126 der ICI (Komponente B 2) verwendet.

### Polymerwerkstoff (Polystyrol)

Als Polymerwerkstoff wurde ein handelsübliches Polystyrol (PS 158K der BASF Aktiengesellschaft) eingesetzt.

### Pigmente, als Beispiele für niedermolekulare Verbindungen

1. Ruß der Type Pigment Black 7 (Color Index 77266; Hersteller Cabot Carbon).
2. Titandioxid (TiO₂) der Type BayerTitan Rutil FKD (Hersteller Bayer AG)

### Verarbeitung

### A) Farb-Batch

Die Pigmente wurde aus verarbeitungstechnischen Gründen ebenfalls in Form einer Vormischung mit Polystyrol bereitgestellt. Die in der Tabelle 2 angegebenen Mengen beziehen sich auf dies Vormischung. In ein handelsübliches Polystyrol, PS 148 H der BASF Aktiengesellschaft wurden - jeweils bezogen auf das Polymergewicht - 60 Gew.-% TiO₂ bzw. 15 Gew.-% Ruß auf einer Zweiwellen-Schneckenknetmaschine (ZSK 30 von Werner & Pfleiderer) eingearbeitet und granuliert.

### B) Dispergier-Batch

Aus dem Styrol/Butadien-Blockcopolymer und den oberflächenaktiven Verbindungen wurde je ein Masterbatch durch Aufschmelzen im Extruder und Granulieren hergestellt. Die Zusammensetzung gibt Tabelle 1 wieder.

**Tabelle 1**

| Zusammensetzung des erfindungsgemäßen Masterbatch | | | |
|---|---|---|---|
| Masterbatch Nr. | 1 | 2 | Vergleich |
| SB-Blockcop. | 100 | 100 | 100 |
| B1 | 1 | 0 | 0 |
| B2 | 0 | 1 | 0 |

**Tabelle 2**

| Mischungen mit Pigmenten | | | | | | |
|---|---|---|---|---|---|---|
| Vers. Nr. | 1a | 1b | 2a | 2b | 3a | 3b |
| Masterbatch 1 | 100 | 100 | ― | ― | ― | ― |
| Masterbatch 1 | ― | ― | 100 | 100 | ― | ― |
| Vergleich | ― | ― | ― | ― | 100 | 100 |
| Ruß + PS | 10 | ― | 10 | ― | 10 | ― |
| TiO₂+ PS | ― | 10 | ― | 10 | ― | 10 |
| PS 158K | 100 | 100 | 100 | 100 | 100 | 100 |

**Tabelle 3**

| Prüfungen | | | | | | |
|---|---|---|---|---|---|---|
| Vers. Nr. | 1a | 1b | 2a | 2b | 3a | 3b |
| Partikelvertlg. | fein | feingrob | fein | feingrob | grob | grob |

Die Partikelverteilung wurde durch visuelles Auszählen von Agglomeraten anhand elektronenmikroskopischer Aufnahmen bei einer Vergrößerung von 2500:1 bestimmt.

Als "fein" wurden Agglomerate im Bereich 0,5 bis 2 µm, als "grob" Agglomerate im Bereich 5 bis 100 µm eingestuft. "Fein-grob" bedeutet Vorkommen von Teilchen beider Bereiche.

## Patentansprüche

1. Verfahren zur Herstellung quasi-homogener Mischungen niedermolekularer Verbindungen mit Styrolpolymeren, dadurch gekennzeichnet, daß das Styrolpolymere, eine vorgefertigten Mischung eines Styrol/Butadien-Blockcopolymeren mit einer oberflächenaktiven Verbindung ("Masterbatch") und die niedermolekulare Verbindung in der Schmelze verknetet werden.

2. Verfahren nach Anspruch 1, dadurch gekennzeichnet, daß als Styrolpolymer ein Styrolhomo- und -copolymerisat ausgewählt aus Standardpolystyrol, schlagzähes Polystyrol, ASA und ABS bzw. deren Schmelze eingesetzt wird.

3. Verfahren nach Anspruch 1, dadurch gekennzeichnet, daß als Styrol-Butadien-Blockcopolymer ein sternförmiges Blockcopolymer aus drei oder mehr Blöcken je Sternast der allgemeinen Struktur (S-B)ₘ, (S-B-S)ₘ, oder (S-B-S-B)ₘ eingesetzt wird mit einer mittleren Molmasse M_{w} von 50 000 bis 500 000 [g/mol], wobei S einen Polystyrolblock einer Molmasse von 3 000 bis 230 000 [g/mol] und B einen Polybutadienblock einer Molmasse von 2 000 bis 30 000 [g/mol] bedeutet und wobei die Gesamtmolmasse aller Polystyrolblöcke 50 000 bis 300 000 [g/mol] und die Gesamtmolmasse aller Polybutadienblöcke 6 000 bis 200 000 [g/mol] beträgt, die Blockübergänge scharf oder verschmiert sind und die Sternastzahl m 3 bis 15 ist.

4. Verfahren nach Anspruch 1, dadurch gekennzeichnet, daß als Styrol-Butadien- Blockcopolymer ein unsymmetrisch sternförmig verzweigtes Styrol/Butadien-Blockcopolymer der allgemeinen Struktur (S1-B1)ₙ-X-(B2-S2)ₚ, eingesetzt wird, in der S1-B1 einen Blockcopolymerabschnitt aus wenigstens je einem Polystyrolblock S1 der Molmasse 3 000 bis 230 000 [g/mol] und einem Polybutadienblock B1 der Molmasse 2 000 bis 30 000 [g/mol] und B2-S2 einen Blockcopolymerabschnitt aus wenigstens je einem Polystyrolblock S2 der Molmasse 2 000 bis 60 000 [g/mol] und einem Polybutadienblock B2 der Molmasse 2 000 bis 30 000 [g/mol] bedeutet, wobei die Gesamtmolmasse von S1-B1: 5 000 bis 250 000 [g/mol] und die von B2-S2: 5 000 bis 75 000 [g/mol] ist, die Blockübergänge scharf oder verschmiert sind und die Gesamt-Sternastzahl von m und n insgesamt bzw. die Funktionalität des (n+p)-wertigen Restes X einess Kupplungsmittels 3 bis 15 ist, mit der Maßgabe, daß n < p ist, und der Polystyrolblock des Abschnitts S1-B1 mindestens die 1,5-fache Molmasse des Polystyrolblocks des Abschnitts B2-S2 aufweist.

5. Verfahren nach Anspruch 1, dadurch gekennzeichnet, daß als Styrol-Butadien-Blockcopolymer ein lineares Styrol-Butadien-Blockcopolymer mit mindestens 2 Polystyrolblöcken und mindestens einem Polybutadienblock eingesetzt wird, wobei die Molgewichtsangaben für S1 bzw. B1 gemäß Anspruch 4 gelten.

6. Verfahren nach Anspruch 1, dadurch gekennzeichnet, daß als Styrol-Butadien-Blockcopolymer ein gegen den Abbau durch Licht, Luftsauerstoff und/oder Wärme stabilisiertes Blockcopolymer eingesetzt wird.

7. Verfahren nach Anspruch 6, dadurch gekennzeichnet, daß als Styrol-Butadien-Blockcopolymer ein eine gegen den Abbau durch Licht, Luftsauerstoff und/oder Wärme stabilisierende Menge von, bezogen auf das Blockcopolymere, 0,1 bis 2 Gew.-% eines sterisch behinderten Phenols und/oder 0,1 bis 2 Gew.-% eines organischen Phosphits der allgemeinen Formel (RO₃P, in der R gleiche oder verschiedene Alkyl-, Aryl- oder Cycloalkyl-Reste sein können), eingesetzt wird.

8. Verfahren nach Anspruch 7, dadurch gekennzeichnet, daß als Styrol-Butadien-Blockcopolymer eine, bezogen auf das organische Phosphit, wirksame Menge von bis zu 5 Gew.-% eines Amins enthaltendes Styrol-Butadien-Blockcopolymer eingesetzt wird.
